Europäisches Patentamt

European Patent Office

Office européen des brevets

(19)

(11) Publication number: **0 137 162**
**B1**

## (12) EUROPEAN PATENT SPECIFICATION

(45) Date of publication of patent specification: **30.11.88**

(51) Int. Cl.⁴: **F 16 D 65/18**

(21) Application number: **84108863.6**

(22) Date of filing: **26.07.84**

(54) **An improved disc brake.**

(30) Priority: **31.08.83 US 528329**

(43) Date of publication of application:
**17.04.85 Bulletin 85/16**

(45) Publication of the grant of the patent:
**30.11.88 Bulletin 88/48**

(84) Designated Contracting States:
**BE CH DE FR GB IT LI NL SE**

(56) References cited:
**DE-A-2 330 949**
**DE-A-2 558 581**
**GB-A-1 443 013**
**GB-A-1 519 980**
**GB-A-1 580 632**
**GB-A-2 088 497**
**US-A-3 800 920**

(73) Proprietor: **Rockwell International Corporation**
**600 Grant Street**
**Pittsburgh Pennsylvania 15219 (US)**

(72) Inventor: **Davidson, Donald J.**
**5833 Rosebrook**
**Troy Michigan 48098 (US)**
Inventor: **Sheill, David D.**
**34661 Broadview**
**Farmington Hills Michigan 48018 (US)**

(74) Representative: **Leiser, Gottfried, Dipl.-Ing. et al**
**Patentanwälte Prinz, Leiser, Bunke & Partner**
**Manzingerweg 7**
**D-8000 München 60 (DE)**

## Description

### Background of the Invention
#### Field of Invention

This invention relates to an improved disc brake and, more specifically, to such a disc brake which utilizes a thrust washer for the powershaft thereof, which thrust washer is prevented from rotating during operation of the brake.

### Description of the Prior Art

One type of disc brake which is well known in the automotive field utilizes a rotating disc or rotor which is mounted for rotation with a wheel. The brake includes a caliper assembly which is mounted on the axle with an extended, outboard portion which overlies the outboard side of the disc and a piston which is aligned with the inboard side of the disc. Axial movement of the piston causes the disc to be entrapped therebetween to produce a frictional force thereon intending to prevent rotation of the disc and wheel.

Such known disc brakes utilize a non-rotatable braking piston which is mounted in a housing of the brake for axial movement toward and away from the friction surface of the disc. Brake actuation means is mounted on the housing. A powershaft is mounted within the housing, is coaxially aligned with the piston and is capable of selective rotation by the brake actuation means. The powershaft has worm gear teeth thereon engaged with a powershaft nut within the housing which powershaft nut is prevented from rotating and is capable of axial movement directly corresponding to the selective rotation of the powershaft. The powershaft nut is operably connected to the piston to produce the axial movement thereof toward and away from the friction surface of the disc.

While these prior art brakes utilize slack adjusters which are within the interior of the housing, the utilization of such a powershaft nut has been found to add to the overall length of the brake. Accordingly, even though there are other similar brakes which utilize slack adjusters external of the housing, there remains a need for providing such a brake which has a minimum overall length while eliminating as many elements as possible which would tend to unnecessarily add to the overall length of the housing of the brake. Nevertheless, any attempt to alter such a brake should include reliable means for preventing the entrance of undesired contaminants into the interior of the housing, means for insuring that lubricant will be properly retained within the housing, and any other features which will insure that the brake will be capable of effectively operating throughout the expected life thereof.

A further prior art disc brake is shown in GB—A—1 519 980 which discloses the features listed in the first part of claim 1.

### Summary of the Invention

It is an object of this invention to provide an improved disc brake which employs an improved thrust washer for the powershaft thereof which will operate effectively throughout the life of the brake.

These and other objects of the invention are solved by providing the features of the characterizing part of claim 1.

### Brief Description of the Drawings

Figure 1 is a fragmentary, elevational view, partially in section, of the preferred caliper brake assembly including various features of the invention.

Figure 2 is a fragmentary, sectional view of the interior of the brake assembly shown in Figure 1.

Figure 3 is a view as seen along line 3—3 of Figure 2.

Figure 4 is a view of the preferred braking piston sealing element as generally seen along line 4—4 of Figure 2.

Figure 5 is a view as seen along line 5—5 of Figure 2.

### Detailed Description of the Preferred Embodiment

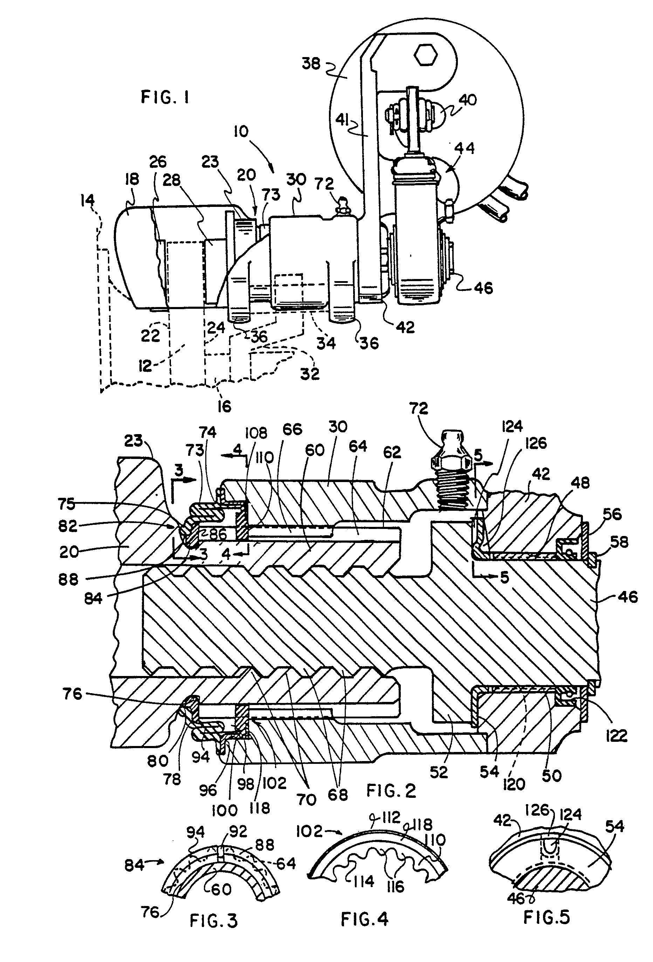

As seen in Figure 1, a preferred caliper disc brake 10 utilizes a disc or rotor 12 which is rigidly mounted on a wheel 14 or the like. The wheel 14 is mounted for rotation about an axle 16 which could be a trailer axle or a drive axle for a truck or tractor. The caliper brake 10 includes an extended portion 18 and a non-rotating, axially movable braking piston 20 which are respectively aligned with an outboard friction surface 22 and an inboard friction surface 24 of the disc or rotor 12. Both the extended portion 18 and an external end 23 of the movable piston 20 respectively employ shoes and friction pads 26 and 28 to produce frictional contact with the opposite sides of the disc 12.

Although only the piston 20 is intended to move within a housing 30 of the caliper brake 10, the method used to produce movement of the piston 20 and to mount the brake 10 on the axle 16 insures that a braking force is applied to the opposite sides of the disc 12. Specifically, the housing 30 of the brake 10 is mounted on a torque plate 32 which is rigidly secured to the axle 16. The torque plate 32 supports a pair (only one shown in Figure 1) of caliper slide pins 34 each of which is slidably supported at an intermediate portion thereof with its opposite ends extending axially therefrom. At each side of the housing 30, a pair of axially spaced supports 36 are provided co-axially aligned holes therethrough for rigidly securing the opposite ends of the caliper slide pin 34 therein. Accordingly, the entire housing 30 of the brake 10 is capable of moving axially relative to the axle 16 and the disc 12.

To produce the axial movement of the brake piston 20, a preferred brake actuation means includes an air chamber 38 which has an actuation rod 40 extending therefrom. The air chamber 38 is rigidly mounted to the housing 30 by a bracket 41 integrally formed with a housing end closure 42 for movement with the housing 30. The actuation rod 40 is coupled to an actuation arm 44 so that inward and outward movement of the rod 40 will produce rotating movement of the arm 44. The actuation arm 44 is of the type which includes a slack adjusting mechanism and is generally disclosed in U.S. Patent No. 3,949,840 which is entitled "Cam Brake Automatic Slack Adjusting Mechanism" and issued on April 13, 1976. However, any number of actuating arms having similar slack adjusters could be alternatively employed. The actuation arm 44 is secured to a power-shaft 46 and it will be seen that rotation of the powershaft 46 will produce corresponding axial movement of the piston 20.

Accordingly, as the brake 10 is being actuated, the actuation rod 40 will produce rotating movement of the actuation arm 44 and outward movement of the piston 20 until the friction pad 28 thereon is brought into contact with the inboard surface 24 of disc 12. If the friction pad 26 on the extended portion 18 is not in contact with the outboard surface 22 of the disc 12, continued movement of piston 20 will cause the entire housing 30 to be moved axially on the caliper slide pins 34 relative the torque plate 32 until both friction pads 26 and 28 apply a compressive force on the disc 12 to produce the desired braking friction at both sides thereof. Although exaggerated for the purposes of demonstration, a normal predetermined running clearance is desired to insure that only minimal axial movement of the piston 20 is required to insure that there is full braking force being applied to the disc 12. Obviously, as the usable material of the friction pads 26 and 28 begins to wear away, there is a concern that the running clearance will be enlarged to a degree which will interfere with quick, reliable braking operation. Accordingly, the prior art slack adjusting means incorporated within the actuation arm 44 will operate to relocate the arm 44 relative to the powershaft 46 during the operational life of the brake 10.

As seen in Figure 2, the powershaft 46 is mounted for rotation within the housing 30 and is coaxially aligned with the piston 20. With the actuation arm 44 splined to the powershaft 46, it is capable of being selectively rotated within the housing 30. Specifically, the powershaft 46 is mounted within a hole 48 in the housing end closure 42 at a bushing 50. The bushing 50 is preferably made of oil impregnated, powdered metal and is press fit into the hole 48. To prevent retraction of the powershaft 46 from the interior of the housing 30 during operation, a radially extending shoulder portion 52 is entrapped within the interior of the housing 30 against a thrust washer 54 which is supported by the housing end closure 42. Various details of the preferred thrust washer 54 will be discussed hereinbelow. Additionally, to prevent undesired insertion of the powershaft 46 into the interior of the housing 30, a washer element 56 encircles the exterior end of the powershaft 46 for contact against the exterior surface of the housing end closure 42 and is retained in position by a snap ring 58.

It will be seen that for proper operation of the preferred brake 10, it is desirable to mount the piston 20 for axial movement within the housing 30 in a manner which will insure against significant rotation thereof while allowing axial movement toward and away from the disc 12. Specifically, the piston 20 has an interior end 60 which is provided a plurality of axially extending splines 64 about an exterior surface 62 thereof. The splines 64 mate with corresponding splines 66 within an interior surface of the housing 30 to limit rotation of the piston 20 so that it will be capable of only axial movement when acted upon by the powershaft 46. To convert the rotational movement of the powershaft 46 to axial movement as required for applying the braking force to the piston 20, worm gear teeth 68 on the powershaft 46 engage with matching internal teeth 70 of the interior end 60 of the piston 20. Accordingly, the piston 20 will move axially in direct correspondence to selective rotation of the powershaft 46.

Although as described hereinabove, the preferred brake 10 will function properly to produce the desired frictional forces on the disc 12, there are a number of features of the basic design which require additional consideration to insure proper operation of the brake. Specifically, because of the large forces generated within a brake of this type, the various contacting surfaces between the elements as described hereinabove require proper lubrication in order to effectively operate throughout the life of the brake 10. Accordingly, a grease fitting 72 is provided to insure that grease or some other suitable lubricant can be periodically resupplied to the interior of the housing 30 throughout the life of the brake. Additionally, the piston 20 is designed to include an encircling, flexible boot seal 73 with a first end 74 secured to the housing 30 and a second end 75 surrounding the interior end 60 of the piston 20 to insure that undesirable contaminants will not enter the interior of the housing 30 and interfere with the operation of the various elements therein.

Although at first glance it might appear that any spline design could be employed, there should be some consideration given to the type of splines 64, 66 provided to insure that there will be effective and reliable movement of the piston 20 throughout operation of the brake 10. Specifically, the splines 64, 66 are preferably provided major diameter fit rather than a fit between the side walls of the splines. The choice of a fit at the major diameter has been made in the preferred brake 10 to insure that the piston 20 will not wobble within the housing 30 although there would appear to be the possibility of some limited rotation of the piston 20 when acted upon by the powershaft 46. If the tolerances were to be critically maintained at the major diameter and the side walls, the resulting surface contact in both regions would unduly complicate installation of the internal end 60 of the piston 20 into the housing 30. Accordingly, it is expected that, once installed, the piston 20 will move in an axial direction with little or no deviation but with some limited rotation being possible and expected during braking operation.

It should be noted that the splines 64 are significantly longer than the splines 66. The splines 64 on the interior end 60 of the piston 20 are axially longer than the splines 66 to allow for the expected repositioning of the piston 20 which occurs during the life of the friction pads 26, 28 as the piston 20 is adjusted by the slack adjuster mentioned hereinabove. Accordingly, although there has heretofore been reference made to the interior end 60 of the piston 20, it should be understood that the interior end 60 will only partially be within the interior of the housing 30 and will extend further from within the housing 30 as the friction pads 26 and 28 become worn. However, since one objective of the preferred brake design is to limit the overall length of the brake 10, such extensive splines 64 have produced a problem in the manufacture of the piston 20. Clearly, if one were not concerned with the overall length of the brake 10, sufficient space could be provided at the terminal end of the splines 64 toward the disc 12 to insure sufficient axial space between the ends of the splines 64 and the second end 75 of the boot seal 73. However, in order to reduce the overall length of the piston 20, it is desirable to have the splines 62 extend as close as possible to the boot seal 73. As a result, it has been found that any attempt to provide the splines 64 through hobbing would add a non-usable portion to the terminal end of the splines 64 which would extend into the region where the boot seal 73 encircles the piston 20. To eliminate this problem, the preferred piston 20 is initially formed to include a circumferential groove 76 having a first radial wall 78 at the designed location of the terminal end of the splines 64 toward the disc 12 and a second radial wall 80 axially separated from the first radial wall 78. Providing such a circumferential groove 76 allows the splines 64 to be formed by shaping since there is accordingly provided a circumferential region for metal relief as the shaping tool completes each path during formation of the splines 64. However, in order to provide a proper channel 82 for receipt of the second end 75 of the boot seal 73, a ring element 84 is mounted in the circumferential groove 76 and has a first side 86 which is against the first radial wall 78 and a second side 88 separated from the second radial wall 80 to define the circumferential channel 82 therebetween.

As seen in Figure 3, the preferred ring element 84 is made of a hard, resilient plastic material and includes a radial slot 92 to allow its expansion over the splines 64 for axial movement therealong until it is installed within the circumferential groove 76. Additionally, the peripheral edge 94 is dimensioned to extend radially beyond the splines 64 to add further protection to the boot seal 73 during operation of the piston 20. It should be noted, of course, that the piston 20 will extend significantly to the left from the position as shown in Figure 2 during the continued wear of the friction pad 26, 28 and extension of the boot seal 73 would increase the likelihood of damage thereto by the splines 64.

To complete the mounting of the boot seal 73 between the housing 30 and the piston 20, the first end 74 of the boot seal 73 is provided an embedded metal portion 96 which is press fitted within a cylindrical recess 98 of the housing 30 against an interior cylindrical wall 100 thereof. As thus mounted, the boot seal 73 will prevent the entrance of undesired contaminants into the interior of the housing 30.

However, as mentioned hereinabove, it is intended that the interior of the housing 30 will be provided a suitable lubricant to insure proper operation of the brake. As a result, there is concern that the periodic resupply of lubricant under pressure at the grease fitting 72 could cause the lubricant to apply significant pressure directly to the boot seal 73 to cause it to be disengagerd or dislodged from either the piston 20 or the housing 30. Accordingly, the preferred brake 10 includes lubricant sealing means 102 which is intended to prevent the lubricant from escaping through the splines 64, 66 and to the boot seal 73.

To provide the preferred lubricant sealing means 102, the cylindrical recess 98 is provided a base including a radially extending annular surface 108. A sealing ring 110 is primarily made of a resiliently compressable material such as nitrile rubber and is installed within the cylindrical recess 98. The sealing ring 110, as seen in Figure 4, has an outer peripheral edge 112 to make contact with the cylindrical wall 100 and an interior edge 114 including the plurality of teeth 116 which are compressed to be received and make sealing contact with the plurality of axially extending splines 64 of the exterior surface 62 of the interior end 60 of the braking piston 20. As shown in Figure 4, the sealing ring 110 is in a non-compressed condition and the size of the teeth 116 are therefor larger than the corresponding dimensions of the spline 64 on which they are to be received.

To insure the sealing ring 110 will be retained within the cylindrical recess 98 throughout operation of the brake, the metal portion 96 of the boot seal 73 is installed, as mentioned hereinabove, to prevent retraction of the sealing ring 110. To add rigidity to the sealing ring 110, and to insure that the teeth 116 will remain in contact with the spline 64 throughout operation of the brake, the sealing ring 110 is provided a radially extending annular metal insert 118 at a side thereof against the annular surface 108 to add rigidity thereto and insure firm contact of the sealing ring 110 with the annular surface 108.

With the sealing ring 110 so installed, lubricant provided at the fitting 72 will be incapable of escaping from the interior of the housing 30 at the end thereof toward the disc 12. However, lubricant will be capable of escaping from the other end of the housing so that one adding lubricant will be able to determine when a sufficient quantity has been added to the interior of the housing 30. Specifically, the lubricant will be capable of passing by the thrust washer 54 and through a plurality of axial grooves 120 formed in the interior surface of the bushing 50. In the preferred brake 10, six such axial grooves 120 are provided. Escaping lubricant will then pass by the end seal 122 around the powershaft 46 and will eventually be visible at the washer element 56 retaining the powershaft 46 from insertion thereof into the housing 30.

As thus described, one might think that any type of thrust washer 54 would be adequate for accommodating the thrust forces created on the powershaft 46 at the radially extending shoulder portion 52. However, it has been found that a preferred thrust washer 54 would be made of steel but would be provided a form of polytetrafluoroethylene at the surface thereof adjacent the shoulder portion 52.

Although polytetrafluoroethylene has a low coefficient of friction at high contact pressures, it has been found at low contact pressure to exhibit a relatively high coefficient of friction. Therefore, when the brake is first being applied and only minor rotation exists between the powershaft 46 and the housing end closure 42, minor rotation of the thrust washer 54 relative to the end closure 42 could be expected. If the thrust washer 54 were allowed to rotate in this manner, undesirable and unacceptable wear of the steel at the surface thereof adjacent the end closure 42 would be expected. Accordingly, the preferred thrust washer 52 is provided an unset portion 124, as seen in Figure 2 and Figure 5, which is to be received within a radially extending recess 126 in the interior surface of the end closure 42. With the upset portion 124 positioned within the recess 126 in this manner, the thrust washer 54 will be prevented from any rotation which would produce excessive wearing of the steel and interfere with its effective operation throughout the use of the brake 10.

## Claim

A disc brake (10) of the type which includes a disc (12) mounted for rotation about an axle (16), a brake housing (30) mounted on said axle (16) in alignment with a friction surface (22, 24) of said disc (12), an axially movable, nonrotatable braking piston (20) having an interior end (60) at least partially mounted within said housing (30) and an external end (23) outwardly of said housing (30) adjacent said friction surface (22, 24) of said disc (12), a brake actuation means (38, 40) mounted on said housing (30), a powershaft (46) mounted within said housing (30) in a hole (48) in an end thereof in coaxial alignment with said braking piston (20) and capable of selective rotation by said brake actuation means, said powershaft having worm gear teeth (68) thereon engaged with mating teeth (70) on said interior end (60) of said braking piston (20) to produce axial movement of said braking piston (20) toward and away from said friction surface (22, 24) of said disc (12) directly corresponding to said selective rotation of said powershaft (46), said powershaft (46) being retained within said housing (30) by a radially extending shoulder portion (52) thereof which overlies an interior surface of said end of said housing (30) and a thrust washer (54) disposed between said shoulder portion (52) and said interior surface, characterized by

said thrust washer (54) being made of steel and having polytetrafluoroethylene at a surface thereof engageable against said shoulder portion (52) for imparting a low coefficient of friction at high contact pressure between the thrust washer (54) and the shoulder portion (52);

said thrust washer (54) having an upset portion thereof extending toward said end of said housing (30); and

said interior surface having a recess (126), the upset portion being received within the recess (126) to prevent rotation of said thrust washer (54) relative to said end of said housing (30) and excessive wear of the thrust washer (54) during said selective rotation of said powershaft (46) when a relatively high coefficient of friction is imparted at low contact pressure between the thrust washer (54) and the shoulder portion (52) during initial application of brake force.

## Patentanspruch

Scheibenbremse (10) vom Typ mit einer Scheibe (12), die um eine Achse (16) drehbar angebaut ist, einem Gehäuse (30) dieser Bremse, das an besagter Achse (16) angerbaut und zur Reibfläche (22, 24) der besagten Scheibe (12) ausgerichtet ist, einem axial beweglichen, nicht drehbaren Bremskolben (20), der ein Innenende (60) aufweist, das zumindest teilweise in besagtem Gehäuse (30) angeordnet ist, und ein Außenende (23), das außerhalb des besagten Gehäuses (30) liegt und an die Reibfläche (22, 24) der Scheibe (12) angrenzt, Bremsbetätigungsmitteln (38, 40), die an besagtem Gehäuse (30) angebaut sind, einer Antriebsspindel (46), die koaxial zu dem Bremskolben (20) in einer Bohrung (48) an einem Ende des Gehäuses (30) eingebaut ist und durch die Bremsbetätigungsmittel selektiv in Drehbewegung versetzt werden kann, wobei die mit Schneckengewindegängen (68) ausgeführt Antriebsspindel in eine entsprechende Verzahnung (70) am Innenende (60) des besagtem Bremskolbens eingreift und diesen in direkter Entsprechung zur selektiven Drehbewegung der Antriebsspindel (46) zur Reibfläche (22, 24) der Scheibe (12) axial verschiebt, wobei die Antriebsspindel (46) durch ein radial ausladendes Schulterteil (52), das auf einer Innenfläche des besagten Endes des besagten Gehäuses (30) aufliegt, in diesem Gehäuse (30) gehalten wird, und einer Druckscheibe (54), die zwischen besagtem Schulterteil (52) und besagter Innenfläche angeordnet ist, dadurch gekennzeichnet, daß

besagte Druckscheibe (54) aus Stahl gefertigt und an ihrer Oberfläche, die mit dem Schulterteil (52) in Berührung kommt, mit Polytetrafluoräthylen beschichtet ist, so daß der Reibungskoeffizient bei hohem Andruck zwischen Druckscheibe (54) und Schulterteil (52) gering ist,

besagte Druckscheibe (54) eine Stauchung aufweist, die sich zu dem besagten Ende des Gehäuses (30) hin erstreckt, und

besagte Innenfläche eine Vertiefung (126) aufweist, in der die Stauchung aufgenommen ist, wodurch eine Verdrehung der Druckscheibe (54) gegenüber dem besagten Ende des Gehäuses (30), verbunden mit übermäßiger Abnutzung, verhindert wird, wenn die Antriebsspindel (46) selektiv verdreht wird und im ersten Stadium der Brekskraftentwicklung der Andruck zwischen Druckscheibe (54) und Schulterteil (52) niedrig und der Reibungskoeffizient hoch ist.

## Revendication

Frein à disque (10), du type comprenant un disque (12) monté en rotation autour d'un essieu (16), un boîtier de frein (30) monté sur l'essieu (16) en alignement avec une surface de friction (22, 24) du disque (12), un piston de freinage (20) mobile axialement, mais immobilisé en rotation, ayant une extrémité intérieure (60) montée au moins partiellement dans le boîtier (30), et une extrémité extérieure (23) en dehors du boîtier (30) au voisinage de la surface de friction (22, 24) du disque (12), un moyen d'actionnement du frein (38, 40), monté sur le boîtier (30), un arbre moteur (46) monté dans le boîtier (30) dans un trou (48) dans une extrémité de celui-ci coaxialement alignée avec le piston de freinage (20) et capable de rotation sélective de la part du moyen d'actionnement de frein, l'arbre moteur portant des dents de vis sans fin en prise avec des dents correspondantes (70) prévues à l'extrémité intérieure (60) du piston de freinage (20) de façon que le piston de freinage (20) s'approche et s'éloigne axialement de la surface de friction (22, 24) du disque (12) en correspondance directe avec la rotation sélective de l'arbre moteur (46), cet arbre moteur (46) étant retenu dans le boîtier (30) par un région épaulée radialement vers l'extérieur (52) qui chevauche une surface intérieure de ladite extrémité du boîtier (30), et une rondelle d'appui (54) disposée entre cette région épaulée (52) et ladite surface intérieure, caractérisé en ce que

ladite rondelle d'appui (54) est en acier et est munie de polytétrafluoroéthylène sur une surface susceptible de venir en appui contre la région épaulée (52) pour créer un coefficient de frottement faible sous une pression de contact élevée entre la rondelle d'appui (54) et la région épaulée (52);

la rondelle d'appui (54) présente une région décalée s'étendant vers ladite extrémité du boîtier (30); et

ladite surface intérieure a un évidement (126) recevant la région décalée pour empêcher la rotation de la rondelle d'appui (54) par rapport à ladite extrémité du boîtier (30) et une usure excessive de la rondelle d'appui (54) pendant la rotation sélective de l'arbre moteur (46) lorsque prévaut un coefficient de frottement relativement élevé sous une pression de contact faible entre la rondelle d'appui (54) et la région épaulée (52) lors du début de l'application de la force de freinage.

EP 0 137 162 B1

FIG. 1

FIG. 2

FIG. 3

FIG.4

FIG.5